# EUROPEAN PATENT SPECIFICATION

(11) **EP 3 860 927 B1**
(45) Date of publication and mention of the grant of the patent: **21.12.2022**
(21) Application number: 19790140.8
(22) Date of filing: 01.10.2019
(51) Int. Cl.: B65D 5/74, B65D 25/48, B65D 77/24, B65D 81/36

(54) **FLUID FILTER PACKAGING**
VERPACKUNG FÜR FLÜSSIGFILTER
PACKAGING POUR FILTRE A LIQUIDE

(30) Priority: 05.10.2018 GB 201816259
(43) Date of publication of application: 11.08.2021
(73) Proprietor: Perkins Engines Company Limited, Cambridgeshire PE1 5FQ (GB)
(72) Inventor: BEARDMORE, James, Stoke-on-Trent Staffordshire ST2 7LG (GB); SAUNDERS, Oscar, Rushden NN10 0QT (GB); PHELPS, Leslie, Stafford Staffordshire ST16-3QG (GB)
(74) Representative: Novagraaf Group
(86) International application number: PCT/EP2019/025329
(87) International publication number: WO 2020/069776

(56) References cited:
- WO-A1-2006/093959
- US-A- 4 756 411
- US-A- 4 895 250
- US-A- 5 092 457
- US-A1- 2014 027 007

## Description

### Technical Field

The disclosure relates to the field of packaging for fluid filters such as oil filters for internal combustion engines.

### Background

It is known to employ one or more oil filters in connection with an internal combustion engine in order to filter oil used for lubrication within the internal combustion engine. This may increase the efficiency and the life expectancy of the internal combustion engine.

An oil filter generally comprises an oil filter housing containing an oil filter element. The oil filter housing may comprise an oil filter port by which the oil filter is mechanically and fluidly connected to a corresponding engine port on the internal combustion engine. For example, the corresponding oil filter port and engine port may comprise cooperating threaded portions that allow straightforward mutual engagement of the oil filter housing and the internal combustion engine. The corresponding oil filter port and engine port may serve the further purpose of providing a conduit for oil into and out of the filter.

Oil filters for internal combustion engines require periodic replacement since filtering quality reduces with use. When using an oil filter with a threaded connection to the internal combustion engine, substituting a used oil filter with a new oil filter may be relatively straightforward.

Used oil filters that require replacement generally contain oil within the oil filter housing. Removing a used oil filter from an engine carries a risk that used oil contained in the used oil filter may spill out of the oil filter housing. This can result in contamination of the exterior of the internal combustion with used engine oil. This may be a particular risk if the oil filter is connected to the internal combustion engine in a horizontal orientation, with the port being horizontal. Furthermore, where the oil filter location is not at the highest part of an internal combustion engine oil circuit, removal of the filter for replacement may release used oil from within the engine out of the oil filter port.

Contamination of components of an internal combustion engine and its surroundings with used engine oil is undesirable for a number of reasons. It may be particularly undesirable where a component located in close proximity to the oil filter location is particularly sensitive to contamination. For example, where the oil filter is located in close proximity to a fuel filter, it may be particularly undesirable to risk used engine oil potentially contaminating fuel.

It is known to provide an oil tray to be located beneath the oil filter during oil filter change. However, given the large variety of different oil filters available, no universal oil tray is available that would be suitable for every filter and every configuration.

Furthermore, providing a large range of oil trays for the wide range of filters available is costly and it is time-consuming to select an appropriate oil tray for each specific situation.

Moreover, providing a reusable tray increases the risk of cross-contamination between oil from one internal combustion engine and oil from another.

WO2006093959A1 discloses one or more disposable funnels provided as integral and detachable portions of the walls of a carton in which containers of a pourable product are enclosed.

US2014027007 discloses a method for fluid control including the steps of packaging a fluid product for use by an end user in a packaging container housing substantially everything required for consumption of the fluid product; enclosing in the packaging container a receptacle adapted to be employed to receive degraded fluid prior to use of the fluid product; and substantially sealing the receptacle after receiving the degraded fluid for subsequent transport of the degraded fluid and an apparatus therefor.

### Summary of the disclosure

Against this background there is provided
a packaged oil filter comprising an oil filter and an item of packaging for the oil filter, the item of packaging having a first configuration and a second configuration wherein:
the first configuration is a packaging configuration in which the item of packaging is configured to package the oil filter; and
the second configuration is an oil tray configuration in which the item of packaging is configured to receive oil;
wherein the oil tray comprises a channel that extends from a proximal end to a distal end;
wherein the distal end includes a narrowing of the channel to serve as a spout; and
wherein the proximal end includes an attachment flange configured for receipt within an orifice of an oil tray mounting bracket of an engine with which the oil filter is designed for use, so as to locate and retain the item of packaging in the oil tray configuration in a location for receipt of oil from the oil filter, or from an oil filter port of the engine, during a filter change process.

In this way, a fluid tray specific to the filter is necessarily provided as part of the packaging of the replacement fluid filter as supplied. Accordingly, there can be certainty that the fluid tray will be appropriately dimensioned. Furthermore, the process of selecting the replacement fluid filter necessarily results in selection the appropriate fluid tray, thus removing an otherwise separate task of choosing and retrieving an appropriate fluid tray. It also avoids issues resulting from incorrect tray selection where, for example, the dimensions of the tray are not sufficient to collect all of the fluid. Furthermore, where the packaging is not designed to be reused, it provides a second use for the packaging prior to disposal. Moreover, since the fluid tray of the invention is intended for single use, it can be disposed of immediately without risking cross-contamination of fluid with that from other used filters.

### Brief description of the drawings

Figure 1 shows an arrangement of three oil filters each mounted generally horizontally on a side face of an internal combustion engine immediately above two fuel filters;
Figure 2 shows the arrangement of Figure 1 in which two oil trays are located beneath two of the three oil filters;
Figure 3 shows a highly schematic representation of an oil filter and an item of packaging for the oil filter;
Figure 4 shows a two dimensional representation of a packaging net which is foldable into the item of packaging shown in Figure 3 and which also includes a first embodiment of an oil tray net represented on the oil filter packaging showing a geometry of an oil tray of the first embodiment;
Figure 5 shows the oil tray produced from the oil tray net represented on the packaging net shown in Figure 4;

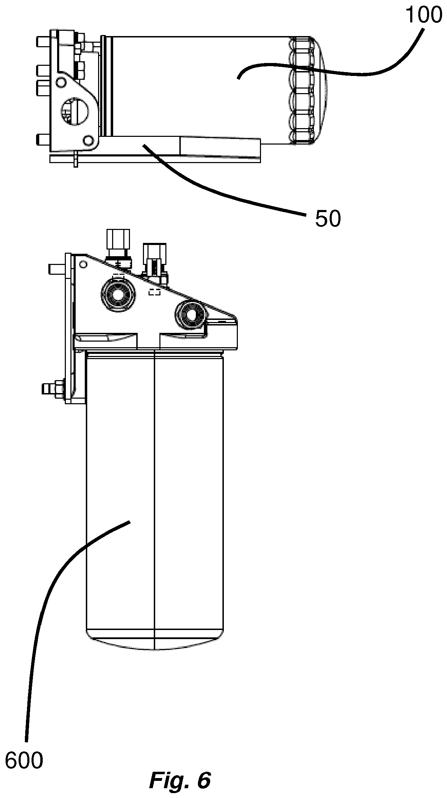

Figure 6 shows a side view of the oil filter, oil and fuel filter in their relative locations in accordance with the arrangement of Figure 2 (but without showing the internal combustion engine) in which it can be seen that the oil tray protrudes outwardly from the engine to a greater extent than the fuel filter protrudes outwardly from the internal combustion engine;
Figure 7 shows a side view of a part of the internal combustion engine from which the three oil filters project and an oil tray mounting bracket providing an orifice beneath each of the three oil filters into which an oil tray engagement portion may be received in use;
Figure 8 shows the side of an internal combustion engine wherein an oil filter has been removed to reveal the engine port with oil flowing out therefrom onto the oil tray located beneath which in turn directs the oil away from the fuel filter (not shown in Figure 8) which may be located beneath;
Figure 9 shows a highly schematic representation of an oil filter and an item of packaging for the oil filter; and
Figure 10 shows a two dimensional representation of oil filter packaging which is foldable into a box dimensioned to receive an oil filter and also shows an oil tray net of a second embodiment represented on the oil filter packaging showing a geometry of an oil tray of the second embodiment.

### Detailed description

Different internal combustion engine configurations are required for different applications. In order for an engine to be accommodated appropriately in an available space within a machine, vehicle, generator set assembly or in any other application and/or to facilitate straightforward access to engine consumables such as filters, it may be that an engine oil filter is mounted horizontally and/or that an engine oil filter is located in close proximity to other engine components which may be vulnerable to contamination from used engine oil.

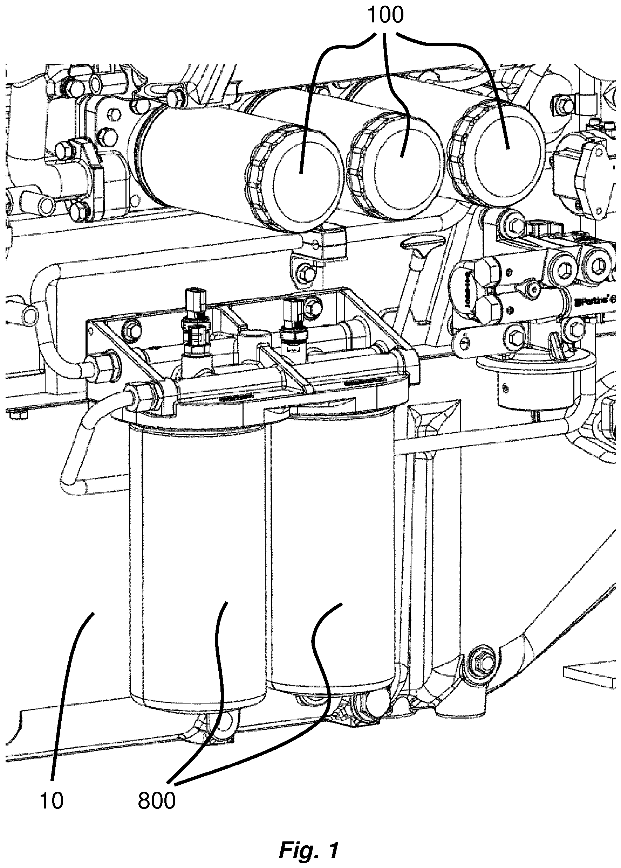

Figure 1 shows an arrangement of three oil filters 100, each mounted generally horizontally on a side face of an internal combustion engine 10 immediately above a pair of fuel filters 800.

Since the oil filters 100 are mounted horizontally and, moreover, are located directly above the fuel filters 800, it may be particularly desirable to ensure that any oil that escapes from any of the oil filters 100 or from the internal combustion engine 10 during replacement of the oil filter 100 is directed away from the fuel filters 800.

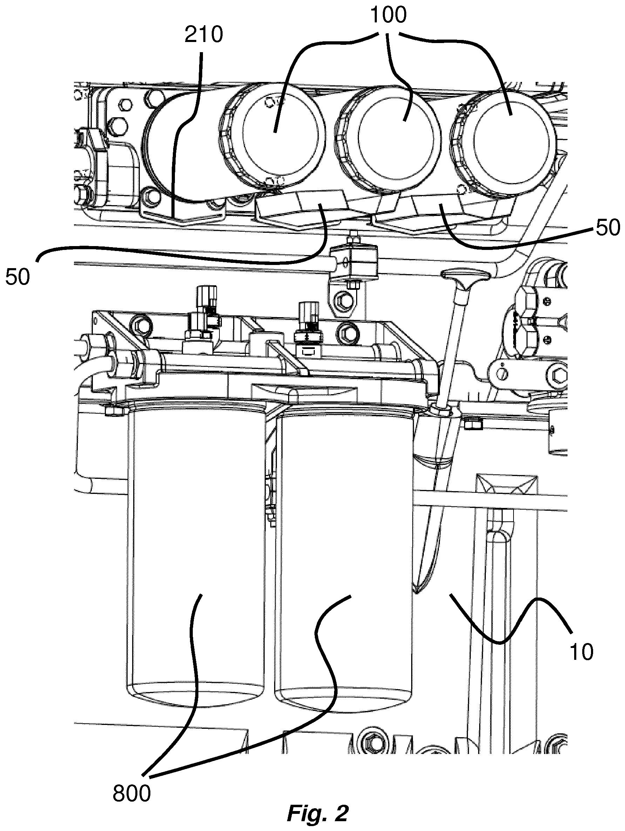

Figure 2 shows the arrangement of Figure 1 with a first embodiment of an oil tray 50 mounted *in situ* beneath each of two of the three oil filters 100.

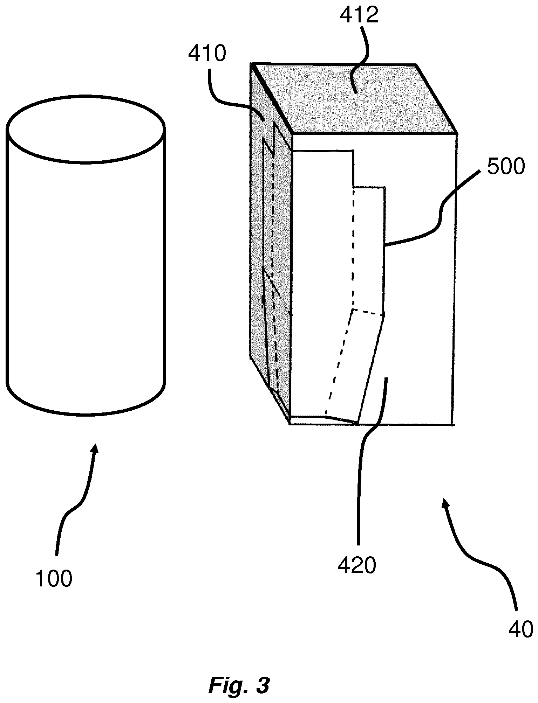

Figure 3 shows a highly schematic representation of the oil filter 100 of the type shown in Figures 1 and 2 together with an item of packaging 40 configured to accommodate the oil filter 100.

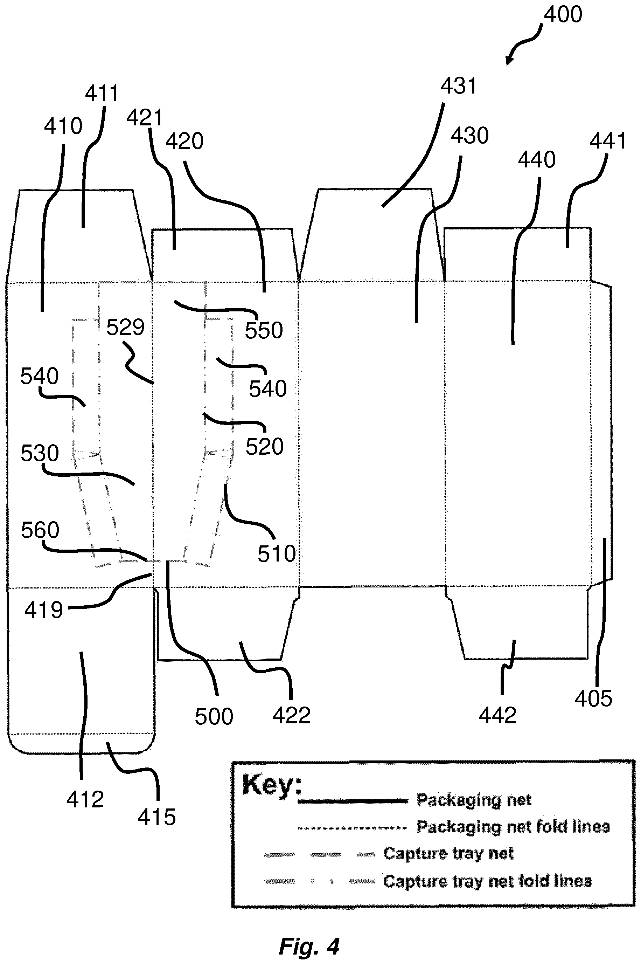

The item of packaging 40 may be formed from a single sheet of material, such as cardboard. The single sheet of material may be of a laminar structure. The single sheet of material may have a hydrophobic or gloss coating to prevent the ingress of fluid into layers beneath the coating. The single sheet of material may be pre-formed. The single sheet of material may be cut to form a primary net 400, shown in Figure 4, which is folded and fastened to form the item of packaging 40.

Referring to Figure 4, the primary net 400 from which the item of packaging 40 may be formed comprises first, second, third and fourth side panels 410, 420, 430, 440 and a tab 405 extending from the fourth side panel 440. The tab 405 is configured to be fastened to the first side panel 410. In this first embodiment each of the first, second, third and fourth side panels 410, 420, 430, 440 has the same width meaning that when formed into the item of packaging 40, the item of packaging 40 has a square cross-section.

The primary net 400 for the item of packaging 40 further comprises base flaps 411, 421, 431, 441 configured so as to form a base of the item of packaging 40 when appropriately folded and affixed as appropriate. Some adhesive or other fixing material may be used or, alternatively, the base flaps 411, 421, 431, 441 may be shaped so as to cooperate in order to form an integral base without the need for an additional fixing material.

The primary net 400 for the item of packaging 40 further comprises top side flaps 422, 422 and a lid flap 412 having an alignment flange 415 by which the lid flap 412 may be aligned appropriately with an interior of the item of packaging 40 in order to enable a substantially enclosed volume that provides exterior packaging for the oil filter 100.

It may be that additional packaging elements (not shown) may be present within the item of packaging 40 for providing protection to an oil filter 100 supplied therein.

The item of packaging 40 also comprises a secondary net 500 for an oil tray 50.

The secondary net 500 comprises an outline 510 of the oil tray 50 and a plurality of fold lines 520. The outline 510 may be marked on the primary net 400 in any appropriate way. The outline 510 may be only visual and/or it may include some line(s) of frangibility. The outline 510 may be printed, etched, creased, perforated, scored or otherwise represented.

The outline 510 represents a separation line at which the secondary net 500 may be separated from the primary net 400.

The plurality of fold lines 520 may be marked on the primary net 400 in any appropriate way. The plurality of fold lines 520 may be only visual and/or may include some line(s) of frangibility. The plurality of fold lines 520 may be printed, etched, creased, perforated, scored or otherwise represented.

The plurality of fold lines 520 represent locations at which the secondary net may be folded to produce the three-dimensional oil tray 50 from the two dimensional secondary net 500.

The plurality of fold lines 520 may be differently represented to the outline 510. For example, the plurality of fold lines 520 may be creased while the outline 510 may be perforated.

In the event that both the outline 510 and the plurality of fold lines 520 are represented at least in part by printing, they may be printed using, for example, different colours or different line representations such as solid and broken lines, respectively.

In the embodiment of Figure 4, the plurality of fold lines 520 of the secondary net 500 may comprise a principal fold line 529 that is co-located with a fold 419 between first and second side panels of the primary net 400. In this way, for this embodiment, the only fold line of the primary net 400 that is located within the secondary net 500 forms a required fold line 520 of the secondary net.

In use, a user removes the new oil filter 100 from the oil filter packaging 40. The user c converts the item of packaging back to its planar form represented by primary net 400 and then detaches the secondary net 500 from the primary net 400. In this way, the exterior geometry of the oil tray 50 is achieved.

Subsequently, the user effects folds at each of the plurality of fold lines 520 of the secondary net 500, thereby producing the full three-dimensional oil tray 50.

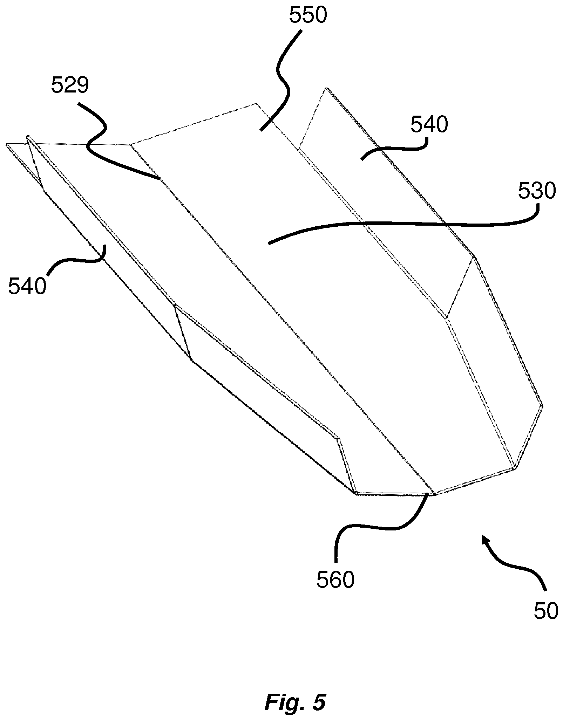

Figure 5 shows the full three-dimensional oil tray 50 in its constructed form.

The oil tray 50 largely comprises a channel 530 that extends from a proximal end that includes an attachment flange 550 to a distal end that includes a narrowing of the channel to serve as a spout 560. A base of the channel 530 has a triangular cross-section with an apex of the triangular cross-section provided by the principal fold line 529. The channel 530 extends between sides 540 that are folded up to extend away from a base of the channel 530 at the principal fold line 529.

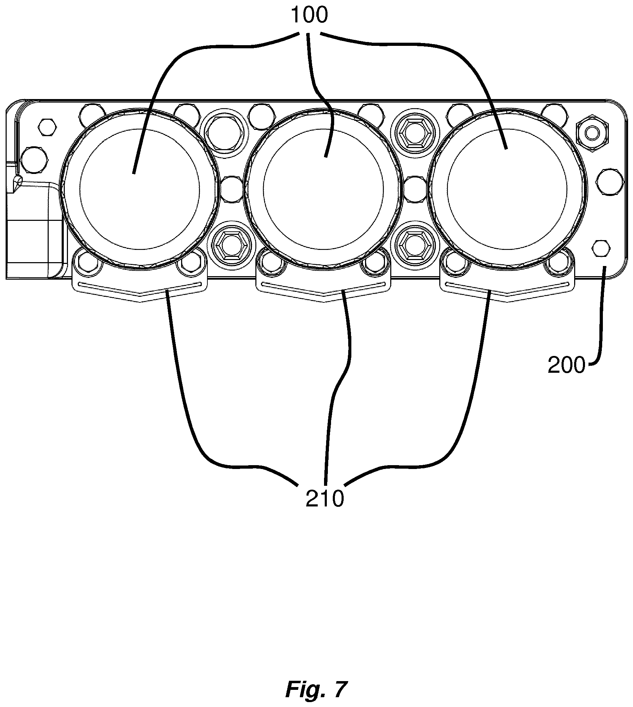

Figure 5 shows a side view of the oil tray 50 in situ beneath an oil filter 100 located relative to one another in their respective locations as would be the case on the internal combustion shown in Figure 1 and 2. Figure 7 shows the three oil filters 100 of Figure 1 together with an oil tray mounting bracket 200. The oil tray mounting bracket 200 may be permanently fastened to the internal combustion engine 10 in the vicinity of the oil filter locations. In this embodiment, the oil mounting bracket 200 may comprise a plate that is bolted to the internal combustion engine 10.

The oil tray mounting bracket 200 comprises an orifice 210 beneath each oil filter location. Each orifice 210 is configured to receive the attachment flange 550 located at the proximal end of each oil tray 50.

In an alternative arrangement, rather than having a dedicated oil mounting bracket 200 that is bolted to the internal combustion engine 10, it may be that the orifices 210 are incorporated into another component, such as being incorporated into an oil filter header.

With the attachment flange 550 of the oil tray 50 located in the orifice 210, each oil tray 50 (one for each oil filter 100) is positioned and retained appropriately such that the distal end of the channel serving as spout 560 extends sufficiently far from the internal combustion engine so that any oil that exits the oil tray 50 via the spout 560 clears ancillary engine components, such as the fuel filters 800 located beneath the oil filter 100.

Once an oil filter substitution has been effected, the oil tray 50 may be removed from the orifice 210 for safe and appropriate disposal.

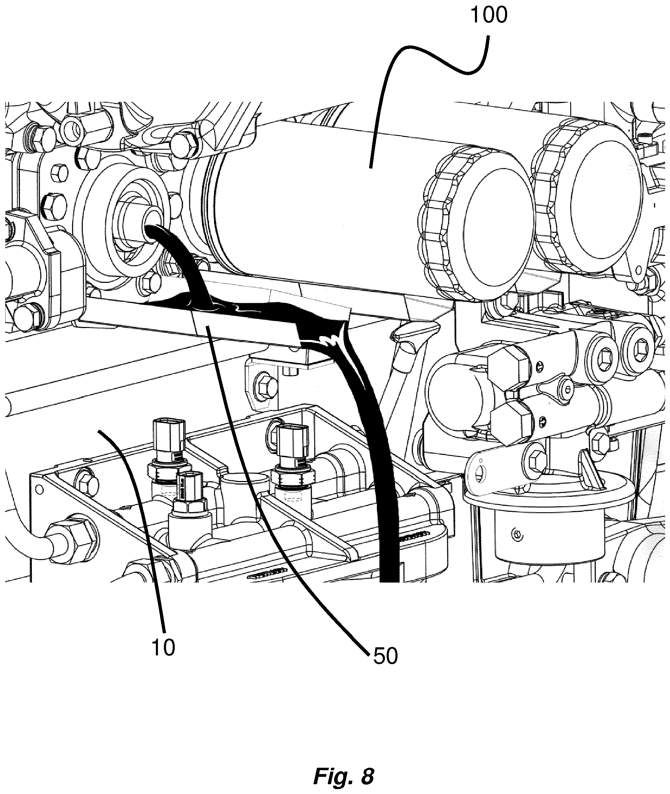

Figure 8 shows an oil tray 50 in situ with oil draining from an oil filter port of an internal combustion engine 10 into the oil tray 50 and being released from the spout 560 of the oil tray 50 at sufficient distance from the internal combustion engine 10 so as to avoid the ancillaries. A bucket or other suitable receptacle (not shown) may be positioned to receive oil that exits the spout 560.

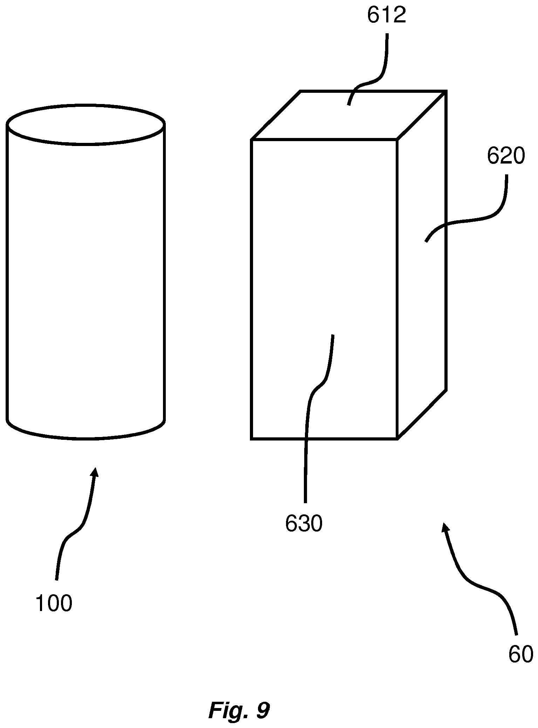

Figure 9 shows a highly schematic representation of the oil filter 100 of the type shown in Figures 1 and 2 together with a second embodiment of an item of packaging 60 configured to accommodate the oil filter 100. The geometry of the second embodiment of the item of packaging 60 may be the same as that of the first embodiment of the item of packaging 40 shown in Figure 3.

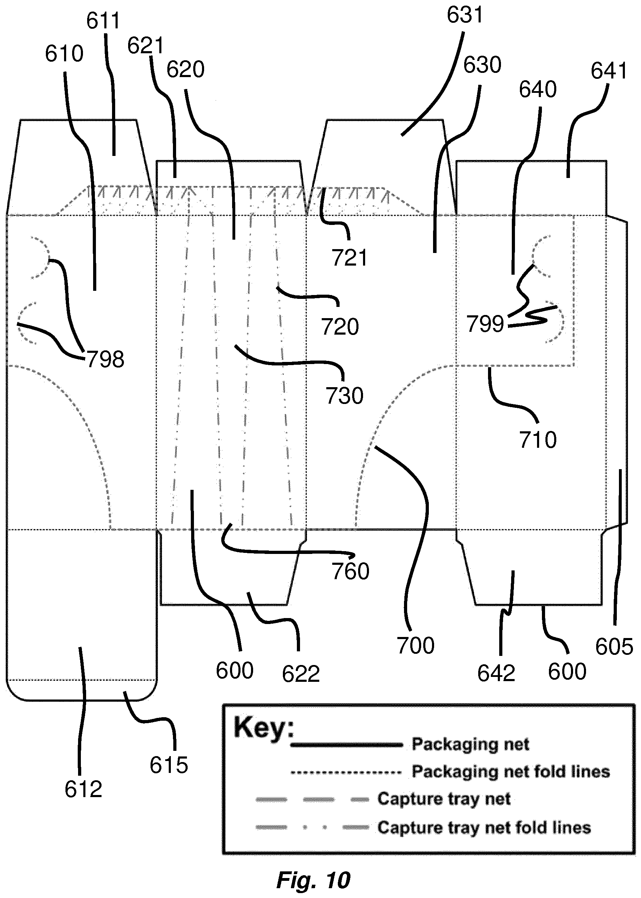

The item of packaging 60 may be formed from a single sheet of material, such as cardboard. The single sheet of material may be cut to form a primary net 600, shown in Figure 10, which is folded and fastened to form the item of packaging 60.

Referring to Figure 10, the primary net 600 from which the item of packaging 60 may be formed comprises first, second, third and fourth side panels 610, 620, 630, 640 and a tab 605 extending from the fourth side panel 640. The tab 605 is configured to be fastened to the first side panel 610 so as to produce the box-shaped item of packaging 60 from the primary net 600. In this second embodiment, each of the first, second, third and fourth side panels 610, 620, 630, 640 has the same width meaning that when formed into the item of packaging 60, the item of packaging 60 has a square cross-section.

The primary net 600 for the item of packaging 60 further comprises base flaps 611, 621, 631, 641 configured so as to form a base of the item of packaging 60 when appropriately folded and affixed as appropriate. Some adhesive or other fixing material may be used or, alternatively, the base flaps 611, 621, 631, 641 may be shaped so as to cooperate in order to form an integral base without the need for an additional fixing material.

The primary net 600 for the item of packaging 60 further comprises top side flaps 622, 622 and a lid flap 612 having an alignment flange 615 by which the lid flap 612 may be aligned appropriately with an interior of the item of packaging 60 in order to enable a substantially enclosed volume that provides exterior packaging for the oil filter 100.

It may be that additional packaging elements (not shown) may be present within the item of packaging 60 for providing protection to an oil filter 100 supplied therein.

The item of packaging 40 also comprises a secondary net 700 for a second embodiment of oil tray 70. The secondary net 700 of the second embodiment 600 of the item of packaging 60 differs in several ways from the secondary net 500 of the first embodiment 400 of the item of packaging 40.

The secondary net 700 comprises an outline 710 of the oil tray 70 and a plurality of fold lines 720. The outline 710 may be marked on the primary net 600 in any appropriate way. The outline 710 may be only visual and/or it may include some line(s) of frangibility. The outline 710 may be printed, etched, creased, perforated, scored or otherwise represented.

The plurality of fold lines 720 may be marked on the primary net 600 in any appropriate way. The plurality of fold lines 720 may be only visual and/or may include some line(s) of frangibility. The plurality of fold lines 720 may be printed, etched, creased, perforated, scored or otherwise represented.

The plurality of fold lines 720 may be differently represented to the outline 710. For example, the plurality of fold lines 720 may be creased while the outline 710 may be perforated.

In the event that both the outline 710 and the plurality of fold lines 720 are represented at least in part by printing, they may be printed using, for example, different colours or different line representations such as solid and broken lines, respectively.

In the embodiment of Figure 10, the oil tray 70 produced from the secondary net 700 is configured to encircle the entire oil filter 100.

The integrity of the circular form of the oil tray 70 may be achieved and maintained by a pair of plug/socket flaps 798, 799 cut into the oil tray 70 wherein a corresponding plug/socket functionality enables opposite sides of the tray to be connected together to form a loop.

By providing an oil tray 70 that encircles the oil filter 100, the oil tray 70 may remain in position relative to the oil filter by virtue of connection to the oil filter 100. In this way, the oil filter tray may be suitable for use in a context where no oil tray mounting bracket 200 is provided and where no orifices 210 are provided beneath each oil filter location to provide means for the oil tray 70 to be held in position relative to the internal combustion engine 10.

An arrangement of cuts and folds 721 at one end of the net enables the oil tray to be configured to encircle an end face of the oil filter 100 surrounding an oil filter port by which the oil filter is connectable to an internal combustion engine 10.

In use, a user removes the new oil filter 100 from the oil filter packaging 70. The user converts the item of packaging back to its planar form represented by primary net 600 and then detaches the secondary net 700 from the primary net 600. In this way, the exterior geometry of the oil tray 70 is achieved.

Subsequently, the user effects folds at each of the plurality of fold lines 720 of the secondary net 700, thereby producing the full three-dimensional oil tray 70.

The oil tray 70 largely comprises a channel 730 that extends from a proximal end to a distal end that includes a narrowing of the channel 730 to serve as a spout 760.

With the oil tray 70 in situ around the oil filter 100, the oil filter 100 can be removed with loss of oil from the oil filter 100 being captured in the tray and diverted to the spout 760.

### Industrial applicability

The oil filter packaging disclosed herein may be used for protecting an engine from contamination by used engine oil. The geometry of the oil tray derived from the packaging may be precisely designed for most appropriate use with the oil filter supplied in the said packaging. Furthermore, the geometry of the oil tray may be precisely designed to cooperate with an engine with which the oil filter is designed for use. The oil filter packaging thereby serves a dual purpose of packaging the oil filter for the supply chain and then converting into a bespoke oil tray for the oil filter in question.

## Claims

1. A packaged oil filter comprising an oil filter (100) and an item of packaging (40, 60) for the oil filter (100), the item of packaging (40, 60) having a first configuration and a second configuration wherein:
the first configuration is a packaging configuration in which the item of packaging is configured to package the oil filter; and
the second configuration is an oil tray (50) configuration in which the item of packaging is configured to receive oil;
wherein the oil tray (50) comprises a channel (530, 730) that extends from a proximal end to a distal end;
wherein the distal end includes a narrowing of the channel to serve as a spout (560); and **characterised in that**:
the proximal end includes an attachment flange (550) configured for receipt within an orifice (210) of an oil tray mounting bracket (200) of an engine (10) with which the oil filter (100) is designed for use, so as to locate and retain the item of packaging (40, 60) in the oil tray (50) configuration in a location for receipt of oil from the oil filter (100), or from an oil filter port of the engine (10), during a filter change process.

2. The packaged oil filter of claim 1 wherein the item of packaging (40, 60) comprises a sheet material which in the packaging configuration is formed into a first three-dimensional structure having a set of elements that mutually cooperate;
wherein the set of elements cease to cooperate in the oil tray configuration.

3. The packaged oil filter of any preceding claim further comprising an outline defining one or more geometric features of the oil tray configuration.

4. The packaged oil filter of claim 3 wherein the outline defining the one or more geometric features of the oil tray configuration includes an indication of a fold line (520, 720) which, when the item of packaging is folded along the fold line (520, 720), facilitates conversion from the packaging configuration to the oil tray (50) configuration.

5. The packaged oil filter of claim 4 wherein the indication of the fold line may comprise one or more of: a crease, a perforation, a score line, or some other line of weakness to guide locating the fold along the fold line.

6. The packaged oil filter of any of claims 3 to 5 wherein the outline defining the one or more features of the oil tray configuration includes an indication of a separation line which, when the item of packaging is separated along the separation line, facilitates conversion from the packaging configuration to the oil tray configuration.

7. The packaged oil filter of claim 6 wherein the indication of the separation line may in whole or in part comprise a crease, a perforation, a score line, or some other line of weakness to guide separation along the separation line.

8. The packaged oil filter of any preceding claim wherein the item of packaging comprises a first part and a second part,
wherein the packaging configuration comprises both the first part and the second part; and
wherein the oil tray configuration comprises the first part and not the second part.

9. The packaged oil filter of claim 8 wherein the item of packaging comprises an outline defining a boundary between the first part and the second part.

10. The packaged oil filter of claim 9 wherein conversion from the packaging configuration to the oil tray configuration involves tearing or cutting.

11. The packaged oil filter of any preceding claim wherein the oil tray configuration comprises a sheath configured to surround an oil filter mounted on an engine so as to locate and retain the item of packaging in the oil tray configuration in a location for receipt of oil from the oil filter during a filter change process.

12. The packaged oil filter of any preceding claim wherein the packaging configuration comprises a box dimensioned to accommodate a characteristic dimension of an oil filter to be packed in the box.

13. The packaged oil filter of claim 12 wherein the oil tray configuration comprises: a channel having a width greater than the characteristic dimension; and a spout.

## Patentansprüche

1. Verpackter Ölfilter, umfassend einen Ölfilter (100) und einen Verpackungsgegenstand (40, 60) für den Ölfilter (100), wobei der Verpackungsgegenstand (40, 60) eine erste Konfiguration und eine zweite Konfiguration aufweist, wobei:
die erste Konfiguration eine Verpackungskonfiguration ist, in der der Verpackungsgegenstand konfiguriert ist, um den Ölfilter zu verpacken; und
die zweite Konfiguration eine Ölwannen(50)konfiguration ist, in der der Verpackungsgegenstand konfiguriert ist, um Öl aufzunehmen;
wobei die Ölwanne (50) einen Kanal (530, 730) umfasst, der sich von einem proximalen Ende zu einem distalen Ende erstreckt;
wobei das distale Ende eine Verengung des Kanals einschließt, um als eine Tülle (560) zu dienen; und **dadurch gekennzeichnet, dass:**
das proximale Ende einen Anbringflansch (550) einschließt, der für die Aufnahme innerhalb einer Öffnung (210) einer Ölwannenbefestigungshalterung (200) eines Motors (10), mit dem der Ölfilter (100) zur Verwendung ausgelegt ist, konfiguriert ist, um den Verpackungsgegenstand (40, 60) in der Ölwannen(50)konfiguration an einer Stelle für die Aufnahme von Öl aus dem Ölfilter (100) oder aus einem Ölfilteranschluss des Motors (10) während eines Filterwechselvorgangs zu lokalisieren und aufzubewahren.

2. Verpackter Ölfilter nach Anspruch 1, wobei der Verpackungsgegenstand (40, 60) ein Bogenmaterial umfasst, das in der Verpackungskonfiguration in eine erste dreidimensionale Struktur ausgebildet wird, die einen Satz von Elementen aufweist, die gegenseitig kooperieren;
wobei der Satz von Elementen aufhört, in der Ölwannenkonfiguration zu kooperieren.

3. Verpackter Ölfilter nach einem der vorstehenden Ansprüche, ferner umfassend einen Umriss, der ein oder mehrere geometrische Merkmale der Ölwannenkonfiguration definiert.

4. Verpackter Ölfilter nach Anspruch 3, wobei der Umriss, der das eine oder die mehreren geometrischen Merkmale der Ölwannenkonfiguration definiert, eine Angabe einer Faltlinie (520, 720) einschließt, die, wenn der Verpackungsgegenstand entlang der Faltlinie (520, 720) gefaltet wird, eine Umwandlung von der Verpackungskonfiguration in die Ölwannen(50) konfiguration erleichtert.

5. Verpackter Ölfilter nach Anspruch 4, wobei die Angabe der Faltlinie eines oder mehrere umfassen kann von: einem Knick, einer Perforation, einer Kerblinie oder eine andere Schwächungslinie, um das Lokalisieren der Faltung entlang der Faltlinie zu führen.

6. Verpackter Ölfilter nach einem der Ansprüche 3 bis 5, wobei der Umriss, der das eine oder die mehreren Merkmale der Ölwannenkonfiguration definiert, eine Angabe einer Trennlinie einschließt, die, wenn der Verpackungsgegenstand entlang der Trennlinie getrennt wird, die Umwandlung von der Verpackungskonfiguration in die Ölwannenkonfiguration erleichtert.

7. Verpackter Ölfilter nach Anspruch 6, wobei die Angabe der Trennlinie einen Knick, eine Perforation, eine Kerblinie oder eine andere Schwächungslinie ganz oder teilweise umfassen kann, um die Trennung entlang der Trennlinie zu führen.

8. Verpackter Ölfilter nach einem der vorstehenden Ansprüche, wobei der Verpackungsgegenstand einen ersten Teil und einen zweiten Teil umfasst,
wobei die Verpackungskonfiguration sowohl den ersten Teil als auch den zweiten Teil umfasst; und
wobei die Ölwannenkonfiguration den ersten Teil und nicht den zweiten Teil umfasst.

9. Verpackter Ölfilter nach Anspruch 8, wobei der Verpackungsgegenstand einen Umriss umfasst, der eine Grenze zwischen dem ersten Teil und dem zweiten Teil definiert.

10. Verpackter Ölfilter nach Anspruch 9, wobei die Umwandlung von der Verpackungskonfiguration in die Ölwannenkonfiguration ein Reißen oder ein Schneiden beinhaltet.

11. Verpackter Ölfilter nach einem der vorstehenden Ansprüche, wobei die Ölwannenkonfiguration eine Hülle umfasst, die konfiguriert ist, um einen Ölfilter zu umgeben, der an einem Motor befestigt ist, um den Verpackungsgegenstand in der Ölwannenkonfiguration an einer Stelle für die Aufnahme von Öl aus dem Ölfilter während eines Filterwechselvorgangs zu lokalisieren und aufzubewahren.

12. Verpackter Ölfilter nach einem der vorstehenden Ansprüche, wobei die Verpackungskonfiguration einen Kasten umfasst, der bemessen ist, um eine charakteristische Abmessung eines Ölfilters unterzubringen, der in den Kasten verpackt werden soll.

13. Verpackter Ölfilter nach Anspruch 12, wobei die Ölwannenkonfiguration umfasst: einen Kanal, der eine Breite aufweist, die größer als die charakteristische Abmessung ist; und eine Tülle.

## Revendications

1. Filtre à huile emballé comprenant un filtre à huile (100) et un article d'emballage (40, 60) pour le filtre à huile (100), l'article d'emballage (40, 60) ayant une première configuration et une seconde configuration dans lequel :
la première configuration est une configuration d'emballage dans laquelle l'article d'emballage est conçu pour emballer le filtre à huile ; et
la seconde configuration est une configuration de plateau d'huile (50) dans laquelle l'article d'emballage est conçu pour recevoir de l'huile ;
dans lequel le plateau d'huile (50) comprend un canal (530, 730) qui s'étend d'une extrémité proximale à une extrémité distale ;
dans lequel l'extrémité distale inclut un rétrécissement du canal pour servir de bec verseur (560) ; et **caractérisé en ce que** :
l'extrémité proximale inclut une bride de fixation (550) conçue pour être reçue à l'intérieur d'un orifice (210) d'un support de montage de plateau d'huile (200) d'un moteur (10) avec lequel le filtre à huile (100) est fait pour être utilisé, de manière à localiser et retenir l'article d'emballage (40, 60) dans la configuration de plateau d'huile (50) dans un emplacement de réception d'huile provenant du filtre à huile (100), ou d'un orifice de filtre à huile du moteur (10), pendant un processus de changement de filtre.

2. Filtre à huile emballé selon la revendication 1, dans lequel l'article d'emballage (40, 60) comprend un matériau en feuille qui, dans la configuration d'emballage, est formé en une première structure tridimensionnelle ayant un ensemble d'éléments qui coopèrent mutuellement ;
dans lequel l'ensemble d'éléments cesse de coopérer dans la configuration de plateau d'huile.

3. Filtre d'huile emballé selon l'une quelconque des revendications précédentes, comprenant en outre un contour définissant une ou plusieurs caractéristiques géométriques de la configuration de plateau d'huile.

4. Filtre à huile emballé selon la revendication 3, dans lequel le contour définissant la ou les caractéristiques géométriques de la configuration de plateau d'huile inclut une indication d'une ligne de pliage (520, 720) qui, lorsque l'article d'emballage est plié le long de la ligne de pliage (520, 720), facilite la conversion de la configuration d'emballage à la configuration de plateau d'huile (50).

5. Filtre à huile emballé selon la revendication 4, dans lequel l'indication de la ligne de pliage peut comprendre un ou plusieurs parmi : un pli, une perforation, un trait de découpe ou une autre ligne de faiblesse pour guider le positionnement du pli le long de la ligne de pliage.

6. Filtre à huile emballé selon l'une quelconque des revendications 3 à 5, dans lequel le contour définissant la ou les caractéristiques de la configuration de plateau d'huile inclut une indication d'une ligne de séparation qui, lorsque l'article d'emballage est séparé le long de la ligne de séparation, facilite la conversion de la configuration d'emballage à la configuration de plateau d'huile.

7. Filtre à huile emballé selon la revendication 6, dans lequel l'indication de la ligne de séparation peut en tout ou en partie comprendre un pli, une perforation, un trait de découpe ou une autre ligne de faiblesse pour guider la séparation le long de la ligne de séparation.

8. Filtre à huile emballé selon l'une quelconque des revendications précédentes, dans lequel l'article d'emballage comprend une première partie et une seconde partie,
dans lequel la configuration d'emballage comprend à la fois la première partie et la seconde partie ; et
dans lequel la configuration de plateau d'huile comprend la première partie et non la seconde partie.

9. Filtre à huile emballé selon la revendication 8, dans lequel l'article d'emballage comprend un contour définissant une limite entre la première partie et la seconde partie.

10. Filtre à huile emballé selon la revendication 9, dans lequel la conversion de la configuration d'emballage vers la configuration de plateau d'huile implique la déchirure ou la découpe.

11. Filtre d'huile emballé selon l'une quelconque des revendications précédentes, dans lequel la configuration de plateau d'huile comprend une gaine conçue pour entourer un filtre à huile monté sur un moteur de manière à localiser et retenir l'article d'emballage dans la configuration de plateau d'huile dans un emplacement de réception d'huile provenant du filtre à huile pendant un processus de changement de filtre.

12. Filtre à huile emballé selon l'une quelconque des revendications précédentes, dans lequel la configuration d'emballage comprend une boîte dimensionnée pour s'adapter à une dimension caractéristique d'un filtre à huile à emballer dans la boîte.

13. Filtre à huile emballé selon la revendication 12, dans lequel la configuration de plateau d'huile comprend : un canal ayant une largeur supérieure à la dimension caractéristique ; et un bec verseur.
